# EUROPÄISCHE PATENTSCHRIFT

(11) **EP 4 645 845 B1**
(45) Veröffentlichungstag und Bekanntmachung des Hinweises auf die Patenterteilung: **11.11.2026**
(21) Anmeldenummer: 24172975.5
(22) Anmeldetag: 29.04.2024
(51) Int. Cl.: H04N 1/46, H04N 23/23

(54) **VERFAHREN ZUR DARSTELLUNG EINES WÄRMEBILDS**
METHOD FOR THE REPRESENTATION OF A THERMAL IMAGE
PROCÉDÉ DE REPRÉSENTATION D'UNE IMAGE THERMIQUE

(43) Veröffentlichungstag der Anmeldung: 05.11.2025
(73) Patentinhaber: Testo SE & Co. KGaA, 79822 Titisee-Neustadt (DE)
(72) Erfinder: Arnold, Stefanie, 78573 Wurmlingen (DE); de Rosso, Sabine, 79843 Löffingen-Bachheim (DE); Evers-Senne, Jan-Friso, 79822 Titisee-Neustadt (DE)
(74) Vertreter: Mertzlufft-Paufler, Cornelius

(56) Entgegenhaltungen:
- CN-A- 105 043 557
- DE-A1- 102011 106 814
- US-A1- 2021 033 471

## Beschreibung

Die Erfindung betrifft ein Verfahren zur Darstellung eines Wärmebilds, wobei jeweils einem Temperaturbereich des Wärmebildes eine Farbe einer Farbpalette zugeordnet wird.

Wärmebildkameras sind mittlerweile im Stand der Technik hinreichend bekannt. Dabei wird ein Wärmebildsensor verwendet, der im Infrarotbereich empfindlich ist. Zur Darstellung eines Wärmebildes wird in der Regel eine Falschfarbendarstellung aus den Sensorwerten des Wärmebildsensors erstellt.

CN 105 043 557 A beschreibt eine Vorrichtung zur Aufnahme von Wärmebildern, eine Vorrichtung zur Verarbeitung von Wärmebildern, ein Verfahren zur Aufnahme von Wärmebildern und ein Verfahren zur Verarbeitung von Wärmebildern bereit und bezieht sich auf die Anwendungsbereiche von Vorrichtungen zur Aufnahme von Wärmebildern, Vorrichtungen zur Verarbeitung von Wärmebildern und Infrarotdetektion. Basierend auf dem Wärmebildaufnahmegerät, dem Wärmebildverarbeitungsgerät, dem Wärmebildaufnahmeverfahren und dem Wärmebildverarbeitungsverfahren, die oben erwähnt sind, können die Parameter der Pseudofarben für bestimmte Bereiche konfiguriert werden. Nach der Verarbeitung von Wärmebilddaten können Infrarot-Wärmebilder nach der Pseudofarbbildverarbeitung erhalten werden.

US 2021/033471 A1 beschreibt eine Bildanzeigevorrichtung, die ein Temperaturinformationsbild erzeugt, das durch einen numerischen Wert eine Temperatur jedes Pixels anzeigt, das in einem vorbestimmten Bereich enthalten ist, der eine von einem Benutzer spezifizierte Position auf einem Wärmebild enthält, und bewirkt, dass eine Anzeige das Temperaturinformationsbild anzeigt, während eine Temperatur eines Pixels, das der spezifizierten Position entspricht, in einer Mitte des Temperaturinformationsbildes angezeigt wird. Die Bildanzeigevorrichtung stellt einen Temperaturbereich ein, der eine vorbestimmte Temperaturbreite und eine Mitte hat, die eine Temperatur eines Pixels ist, das einer Position des Temperaturinformationsbildes entspricht, die durch den Benutzer spezifiziert ist, aktualisiert die Temperatur-Farbumwandlungsinformation basierend auf dem eingestellten Temperaturbereich, regeneriert das Wärmebild und das Temperaturinformationsbild basierend auf der aktualisierten Temperatur-Farbumwandlungsinformation und veranlasst die Anzeige, das regenerierte Wärmebild und das regenerierte Temperaturinformationsbild anzuzeigen.

DE 10 2011 106814 A1 offenbart ein Wärmebildkamera-Set, welches wenigstens eine Wärmebildkamera und ein Bildverarbeitungsmittel umfasst, das zur Ausführung eines Verfahrens zur Bildanalyse- und/oder Bildbearbeitung eines mit der Wärmebildkamera aufgenommenen IR-Bildes eingerichtet ist, bei welchem ein angewähltes Objekt in dem IR-Bild automatisch rechnergestützt segmentiert und einem objektbezogenen Bildanalyse- oder Bildbearbeitungsschritt unterworfen wird.

Hierbei steht zumeist eine begrenzte Anzahl an Farben zur Verfügung, die einzelnen Temperaturwerten oder Temperaturbereichen zugewiesen werden. Dabei kann die Farbpalette innerhalb des Messbereichs des Wärmebildsensors fest vorgegeben sein. Das bedeutet, dass einer Temperatur eine Farbe fest zugeordnet ist, unabhängig von der Temperaturverteilung im gesamten Bild. Dabei besteht das Problem, dass unter Umständen ein sehr geringer Kontrast im Bild entsteht, wenn nur ein geringer Temperaturbereich des gesamten Messbereichs vorhanden ist.

Um in solchen Fällen den Kontrast zu erhöhen, ist es beispielsweise bekannt, die Farbpalette dynamisch an den Temperaturbereich anzupassen, der tatsächlich im Wärmebild vorhanden ist, wobei die Farbzuordnung weiterhin linear erfolgt. Das bedeutet, dass die zur Verfügung stehenden Farben nicht mehr auf den gesamten Messbereich, sondern auf den vorhandenen Temperaturbereich verteilt werden.

Weiterhin ist es bekannt, einen sogenannten Histogrammausgleich vorzunehmen, bei dem häufig vorkommende Temperaturwerte stärker gewichtet werden und somit deren Kontrast erhöht wird.

Aber hierbei kann je nach Szene der Kontrast für weniger relevante Bildinhalte verstärkt werden, während für die eigentlich interessanten Regionen ein geringer Kontrast im Bild resultiert. Aufgabe der Erfindung ist es daher, ein Verfahren der eingangs genannten Art zu schaffen, das eine verbesserte Darstellung eines Wärmebildes erlaubt.

Diese Aufgabe wird durch ein Verfahren mit den Merkmalen des Anspruchs 1 gelöst.

Erfindungsgemäß wird in dem Wärmebild wenigstens ein interessierender Bereich markiert. Daraufhin wird eine Abbildungsfunktion, nach der die Farben einem Temperaturbereich zugeordnet werden, bestimmt, wobei Kontraste im interessierenden Bereich verstärkt und Kontraste außerhalb des interessierenden Bereichs reduziert werden. Der interessierende Bereich ist ein geometrischer Bereich innerhalb des Wärmebildes..

Dabei wird die Darstellung des gesamten Bildes so angepasst, dass der Kontrast in dem geometrischen Bereich optimiert oder verbessert wird. Auf diese Weise ist es möglich, unabhängig von der Temperaturverteilung im gesamten Bild, einen geometrischen Bereich besonders deutlich darzustellen.

In einer Ausführung werden einem Temperaturbereich, der innerhalb eines interessierenden Bereichs in dem Wärmebild auftritt, mehr Farben der Farbpalette zugeordnet, als es bei gleichmäßiger Farbverteilung der Fall wäre. Hierdurch entsteht eine nicht-lineare Zuordnung von Farben, die den Temperaturbereich innerhalb des interessierenden Bereichs gegenüber dem restlichen Wärmebild mit besserem Kontrast und höherer Farbauflösung darstellt. Die Darstellung des Wärmebilds ist dadurch wesentlich verbessert.

In einer Ausführung wird einem Temperaturbereich ein desto größerer Bereich der Farbpalette zugeordnet, je häufiger und je geometrisch näher an einem interessierenden Bereich des Wärmebildes Temperaturwerte innerhalb des Temperaturbereichs auftreten.

Anders ausgedrückt wird einem Temperaturbereich eine Anzahl an Farben zugeordnet, in Abhängigkeit davon je häufiger und je geometrisch näher an einem interessierenden Bereich des Wärmebildes Temperaturwerte innerhalb des Temperaturbereichs auftreten.

Die Darstellung des interessierenden Bereichs wird dadurch selektiv verbessert, während der Rest des Wärmebildes trotzdem erkennbar bleibt.

In einer Ausführung bekommen Temperaturbereiche mit bestimmten Gradienten innerhalb eines interessierenden Bereichs einen größeren Bereich der Farbepalette zugeordnet.

Die Erfindung betrachtet unter anderem den Fall, dass der interessierende Bereich nicht alle Temperaturwerte des Gesamtwärmebildes enthält. Das bedeutet, der interessierende Bereich entspricht auch einem Temperaturbereich, der eine echte Untermenge des Temperaturbereichs des gesamten Wärmebildes ist. In Ausnahmefällen kann es vorkommen, dass dies nicht zutrifft. In diesen Ausnahmefällen ergibt sich der erfinderische Effekt nicht. Diese Ausnahmefälle sind jedoch nicht das Ziel der Erfindung und sollen hierbei unberücksichtigt bleiben.

Die Erfindung ist auch anwendbar in dem Fall, wenn der interessierende Bereich (die Region of Interest) den vollen Temperaturbereich umfasst (aber mit anderer Verteilung).

Nachfolgend ist der Begriff interessierender Bereich daher sowohl als geometrischer Bereich als auch als Temperaturbereich gemeint.

Durch die Anpassung der Abbildungsfunktion an den gewählten interessierenden Bereich ist eine verbesserte Darstellung für diesen geometrischen Bereich erzielbar.

Erfindungsgemäß wird zur Verbesserung der Kontraste die Abbildungsfunktion in verschiedene Abschnitte unterteilt, wobei ein erster Abschnitt durch die Temperaturgrenzen des wenigstens einen interessierenden Bereichs gegeben ist, und weitere Abschnitte die Temperaturen außerhalb des wenigstens einen interessierenden Bereichs abbilden, wobei im ersten Abschnitt die Abbildungsfunktion so gewählt wird, dass Kontraste erhöht werden, und wobei in den weiteren Abschnitten die Abbildungsfunktion so gewählt wird, dass Kontraste reduziert werden.

Erfindungsgemäß ordnet die Abbildungsfunktion zur Erhöhung der Kontraste dem ersten Abschnitt mehr Farben zu als den weiteren Abschnitten.

Alternativ und/oder zusätzlich wird in einer Ausführung die Abbildungsfunktion gemäß einem Histogrammausgleich gewählt, wobei die Temperaturwerte innerhalb des ersten Abschnitts stärker gewichtet werden als Temperaturwerte, die nur in weiteren Abschnitten vorkommen.

In einer Ausführung wird bei der Erstellung des Histogramms ein Temperaturwert, der innerhalb des interessierenden Bereichs vorkommt mit einem Gewichtungsfaktor multipliziert, so dass der Temperaturwert überproportional in dem Histogramm berücksichtigt ist.

In einer Ausführung wird der interessierende Bereich durch Wählen eines Bildpunktes oder Bildausschnitts markiert. Der interessierende Bereich kann dabei auch mehrere Bildpunkte des Wärmebildes umfassen, wobei beispielsweise der interessierende Bereich durch ein Rechteck oder einen Kreis um den ausgewählten Bildpunkt definiert ist. Dabei kann die Größe des Rechtecks beziehungsweise des Kreises vorgegeben, einstellbar oder wählbar sein.

In einer Ausführung wird der interessierende Bereich automatisiert in der Bildmitte des Wärmebildes oder an einem Punkt mit der höchsten oder niedrigsten Temperatur markiert. Auf diese Weise ist eine einfache Markierung des interessierenden Bereichs möglich durch Ändern des Bildausschnitts. Eine Wärmebildkamera kann etwa auch Mittel zum Darstellen des interessierenden Bereichs auf dem zu messenden Objekt umfassen. Dies kann etwa ein Laserprojektor sein.

In einer Ausführung ist eine Größe des interessierenden Bereichs festgelegt, einstellbar und/oder änderbar. Auf diese Weise kann der interessierende Bereich je nach Messsituation geändert werden.

In einer Ausführung ist der interessierende Bereich durch einen Kreis, ein Rechteck, ein Quadrat oder eine andere Geometrie definiert.

In einer Ausführung wird ein Bild im sichtbaren Spektralbereich bereitgestellt, dessen Bildausschnitt im Wesentlichen mit dem Bildausschnitt des Wärmebilds übereinstimmt. Der interessierende Bereich wird in diesem sichtbaren Bild markiert und der interessierende Bereich auf das Wärmebild übertragen. Auf diese Weise kann ein interessierender Bereich auf einfache Weise markiert und eventuell in seiner Größe und/oder Form verändert werden.

In einer Ausführung können mehrere interessierende Bereiche markiert werden, die im Rahmen des Verfahrens als ein zusammenhängender interessierender Bereich betrachtet werden. Demnach definieren mehrere geometrische, auch unzusammenhängende, Bereiche einen interessierenden Temperaturbereich.

Die Erfindung ist nachfolgend mit Bezug auf die beiliegenden Zeichnungen näher erläutert.

Es zeigt:
- Fig. 1:: ein Wärmebild einer ersten Szene mit einem eingezeichneten interessierenden Bereich, der etwa in der Bildmitte liegt,
- Fig. 2:: eine vergrößerte Darstellung des interessierenden Bereichs des Wärmebilds der Fig. 1,
- Fig. 3:: das Histogramm des Wärmebilds der Fig. 1,
- Fig. 4:: ein Diagramm einer linearen Abbildungsfunktion der Temperaturwerte zu einem ganzzahligen Wert, der einer Farbe zugeordnet werden kann,
- Fig. 5:: ein Diagramm einer abschnittsweise linearen Abbildungsfunktion der Temperaturwerte,
- Fig. 6:: das Wärmebild der Fig. 1 mit gemäß der abschnittsweisen Abbildungsfunktion der Fig. 5 gewählten Farben,
- Fig. 7:: das Histogramm des Wärmebilds der Fig. 6,
- Fig. 8:: ein Histogramm des Wärmebilds der Fig. 1, bei dem der interessierende Bereich 10-fach gewichtet ist,
- Fig. 9:: das Wärmebild der Fig. 1 mit einem gewöhnlichen Histogrammausgleich,
- Fig. 10:: das Wärmebild der Fig. 1 mit einem Histogrammausgleich gemäß dem 10-fach gewichtetem Histogramm der Fig. 8,
- Fig. 11:: das Histogramm des Wärmebilds der Fig. 9,
- Fig. 12:: das Histogramm des Wärmebilds der Fig. 10,
- Fig. 13:: ein Wärmebild einer zweiten Szene mit einem eingezeichneten interessierenden Bereich, der in der linken, unteren Bildecke liegt,
- Fig. 14:: das Histogramm des Wärmebilds der Fig. 13,
- Fig. 15:: ein Diagramm einer linearen Abbildungsfunktion der Temperaturwerte zu einem ganzzahligen Wert, der einer Farbe zugeordnet werden kann,
- Fig. 16:: ein Diagramm einer abschnittsweise linearen Abbildungsfunktion der Temperaturwerte,
- Fig. 17:: das Wärmebild der Fig. 13 mit gemäß der abschnittsweisen Abbildungsfunktion der Fig. 16 gewählten Farben,
- Fig. 18:: das Histogramm des Wärmebilds der Fig. 17,
- Fig. 19:: ein Histogramm des Wärmebilds der Fig. 13, bei dem der interessierende Bereich 10-fach gewichtet ist,
- Fig. 20:: das Wärmebild der Fig. 13 mit einem gewöhnlichen Histogrammausgleich,
- Fig. 21:: das Wärmebild der Fig. 13 mit einem Histogrammausgleich gemäß dem 10-fach gewichtetem Histogramm der Fig. 19,
- Fig. 22:: das Histogramm des Wärmebilds der Fig. 20,
- Fig. 23:: das Histogramm des Wärmebilds der Fig. 21,
- Fig. 24:: ein Ablaufdiagramm eines Verfahrens zum Einfärben eines Wärmebilds,
- Fig. 25:: ein Ablaufdiagramm eines ersten Verfahrens zum Erstellen einer Abbildungsfunktion und
- Fig. 26:: ein Ablaufdiagramm eines zweiten Verfahrens zum Erstellen einer Abbildungsfunktion.

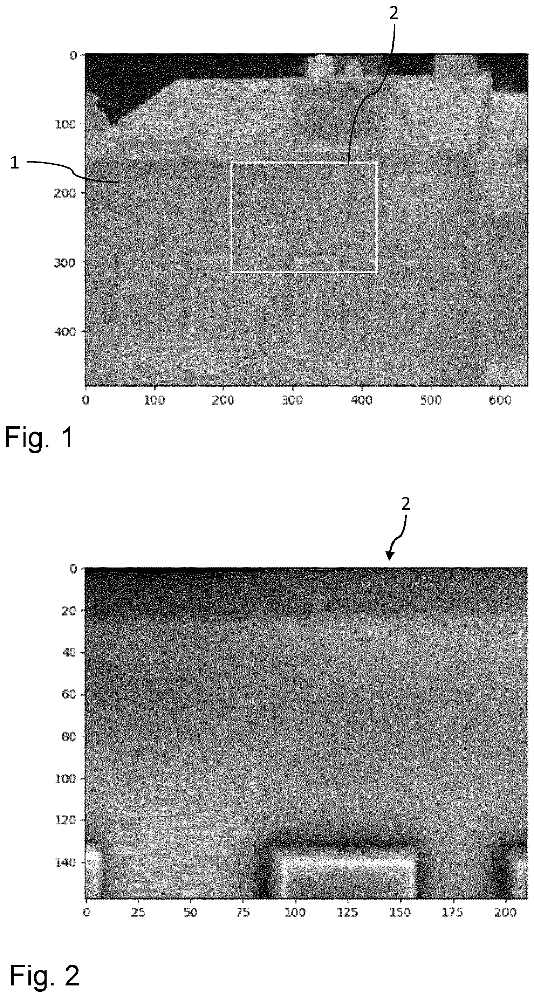

Die Fig. 1 zeigt ein Wärmebild 1 einer ersten Szene mit einem eingezeichneten interessierenden Bereich 2, der etwa in der Bildmitte liegt. Die Fig. 2 zeigt den Ausschnitt des interessierenden Bereichs 2 in einer vergrößerten Darstellung.

Im Beispiel beträgt das globale Temperatur-Minimum (Gmin) in der Szene 4,4°C und das globale Temperatur-Maximum (Gmax) 21,2°C. Innerhalb des interessierenden Bereichs, RoI, beträgt das regionale Minimum (Rmin) 10,2°C und das regionale Maximum (Rmax) 13,6°C.

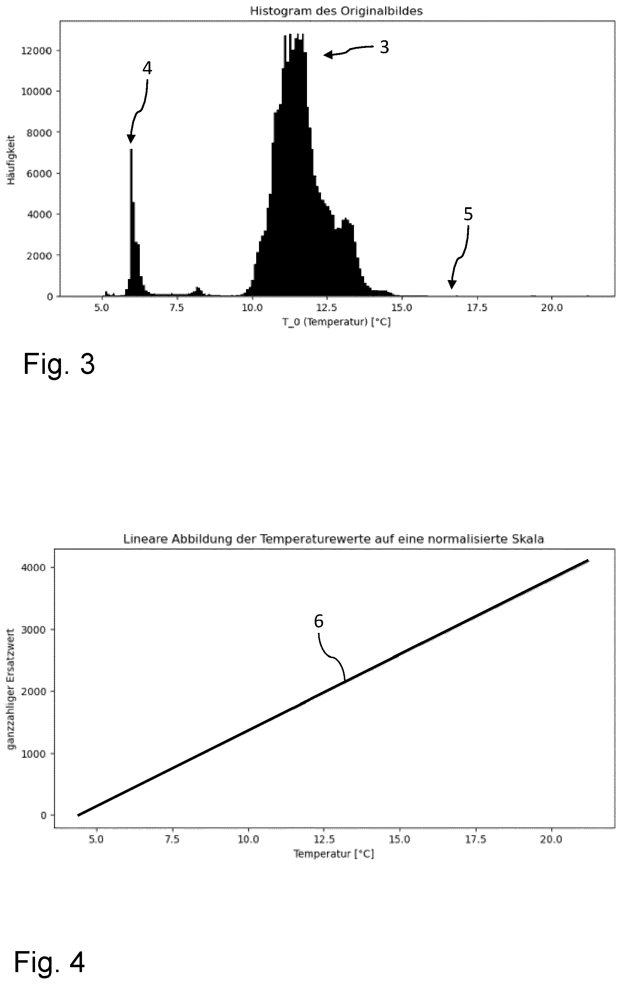

Die Fig. 3 zeigt das Histogramm dieses Wärmebildes. Das Histogramm hat einen Haupt-Peak 3 zwischen 10°C und 13 °C, der etwa durch die Hauswand gebildet ist. Demnach liegt der interessierende Bereich im Wesentlichen innerhalb dieses Haupt-Peaks 3.

Ein zweiter Peak 4 liegt bei etwa 6 °C, der wohl durch den Himmel gebildet ist.

Ein flacher Bereich 5 oberhalb 15 °C spiegelt die Summe aller kleinen Wärmequellen wider.

Die Fig. 4 zeigt eine lineare Abbildungsfunktion 6, anhand der das Wärmebild der Fig. 1 eingefärbt und dargestellt ist. Solche linearen Abbildungsfunktionen sind im Stand der Technik üblich.

Im Beispiel weist die Farbpalette 4096 Farben auf. Die Abbildungsfunktion 6 transformiert die Temperaturwerte (X-Achse) des Wärmebildsensors auf eine ganze Zahl (Y-Achse) im Bereich zwischen 0 und 4095. Die Farbpalette wiederum ist eine sogenannte Lookup-Tabelle, die jedem Wert zwischen 0 und 4095 einem Farbwert zuordnet.

Die Abbildungsfunktion 6 der Fig. 4 ist normiert auf den tatsächlich in der Szene vorhandenen Temperaturbereich. Im Beispiel beträgt das Temperatur-Minimum Gmin in der Szene 4,4°C und das Temperatur-Maximum Gmax 21,2°C. Die Abbildungsfunktion 6 der Fig. 4 ist nun so gewählt, dass sie den Temperaturbereich zwischen Gmin und Gmax auf die vorhandenen 4096 Farbwerte linear zuordnet. Auf diese Weise wird die gesamte Farbpalette in dem Bild verwendet.

Allgemein kann die Abbildungsfunktion wie folgt beschrieben sein:
[Gmin, Gmax] -> [0, resolution]
resolution = 4096$s = resolution / \left(Gmax-Gmin\right) # scale factor$$imgNorm = \left(mgRad-Gmin\right) * s$

Gmin ist das globale Minimum der Temperaturwerte im Wärmebild. Gmax ist das globale Maximum der Temperaturwerte im Wärmebild.

Im Beispiel wäre Gmin=4,4°C und Gmax=21,2°C.

Wie jedoch anhand des Histogramms ersichtlich ist, wird ein großer Teil der Farbpalette für uninteressante Bereiche verwendet, während der interessierende Temperaturbereich nur etwa 17% der vorhandenen Farben verwendet.

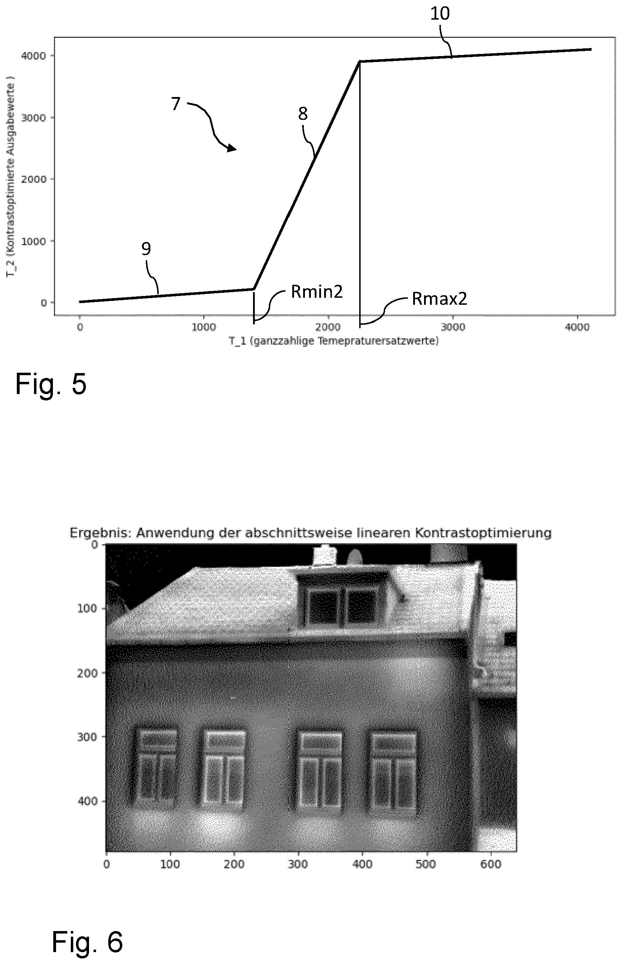

Gemäß einer Ausführung der Erfindung wird nun diese lineare Abbildungsfunktion in eine abschnittsweise lineare Abbildungsfunktion geändert. Eine solche abschnittsweise lineare Abbildungsfunktion 7 ist beispielhaft in der Fig. 5 gezeigt.

Im Wesentlichen besteht die abschnittsweise lineare Abbildungsfunktion 7 aus drei Abschnitten, wobei ein erster Abschnitt 8 durch das regionale Temperaturminimum Rmin und das regionale Temperaturmaximum Rmax definiert ist. Daneben gibt es weitere Abschnitte unterhalb 9 und oberhalb 10 dieser regionalen Extrema.

Es werden dann für den ersten Abschnitt 8 die meisten Farben der Farbpalette verwendet, um den Kontrast für diesen interessierenden Bereich zu erhöhen.

Diese Abbildungsfunktion 7 ist im Beispiel als eine Transferfunktion ausgebildet, die einem ganzzahligem Farbwert einen anderen ganzzahligen Farbwert zuordnet. Demnach reichen die X-Achse und die Y-Achse von 0 bis 4095.

Die Abbildungsfunktion 7 ist so gewählt, dass für den Abschnitt 8 Rmin2 < T_1 < Rmax2 im Beispiel 90% der zur Verfügung stehenden Farben der Farbpalette verwendet werden. Der untere Abschnitt 9 und der obere Abschnitt 10 erhalten jeweils 5% der Farben. Der interessierende Bereich 2 wird dadurch wesentlich detaillierter und kontrastreicher dargestellt im Vergleich zur linearen Abbildungsfunktion 6. Selbstverständlich können die Anteile der einzelnen Abschnitte auch anders gewählt werden, etwa 85% für den interessierenden Bereich, 10% und 5% für die anderen Bereiche. Dies kann je nach Anwendung und auch je nach Bild anders gewählt sein.

Die abschnittsweise lineare Abbildungsfunktion 7 kann jedoch auch wie die Abbildungsfunktion 6 einem Temperaturwert (X-Achse) einen Farbwert (Y-Achse) zuweisen.

Die Fig. 6 zeigt das Wärmebild der Fig. 1, das gemäß der in Fig. 5 gezeigten abschnittsweise linearen Abbildungsfunktion 7 eingefärbt ist. Die Darstellung ist im Vergleich zu Fig. 1 innerhalb des im interessierenden Bereich 2 vorhandenen Temperaturbereich wesentlich detaillierter und kontrastreicher.

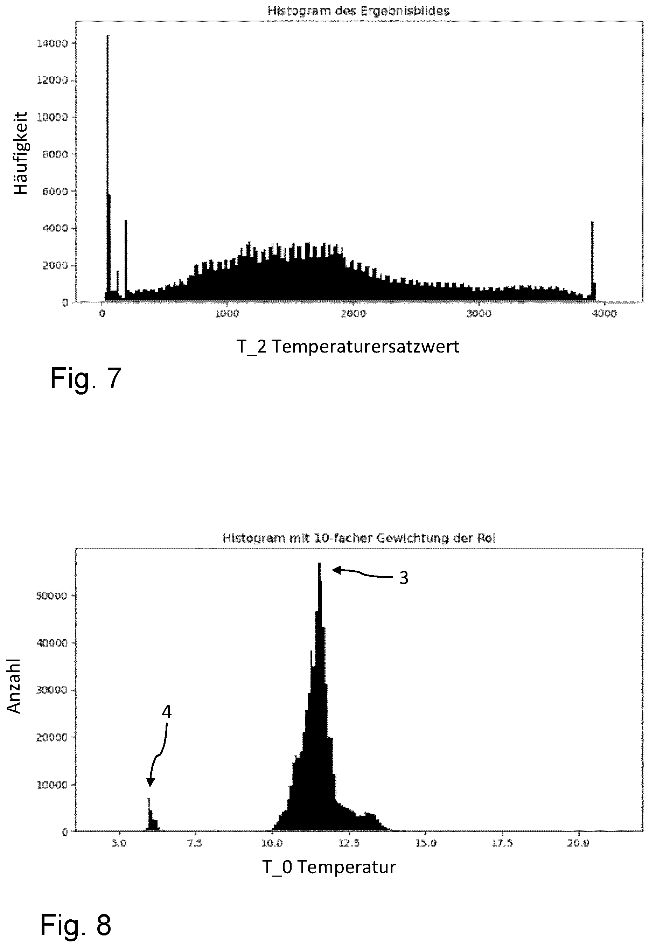

Die Fig. 7 zeigt zur Bestätigung das Histogramm des mit dieser Abbildungsfunktion 7 eingefärbten Wärmebilds. Der gemäß dem interessierenden Bereich 2 als interessant erkannte Temperaturbereich nutzt nun den größten Anteil des Dynamikbereiches aus, nämlich 90%. Gegenüber der Fig. 1 werden also im interessierenden Bereich 2 fünf mal mehr Farben verwendet, wodurch die Darstellung wesentlich verbessert ist. In angrenzenden Temperaturbereichen ist dennoch noch Struktur zu erkennen. Clipping findet nur für den kalten Himmel statt.

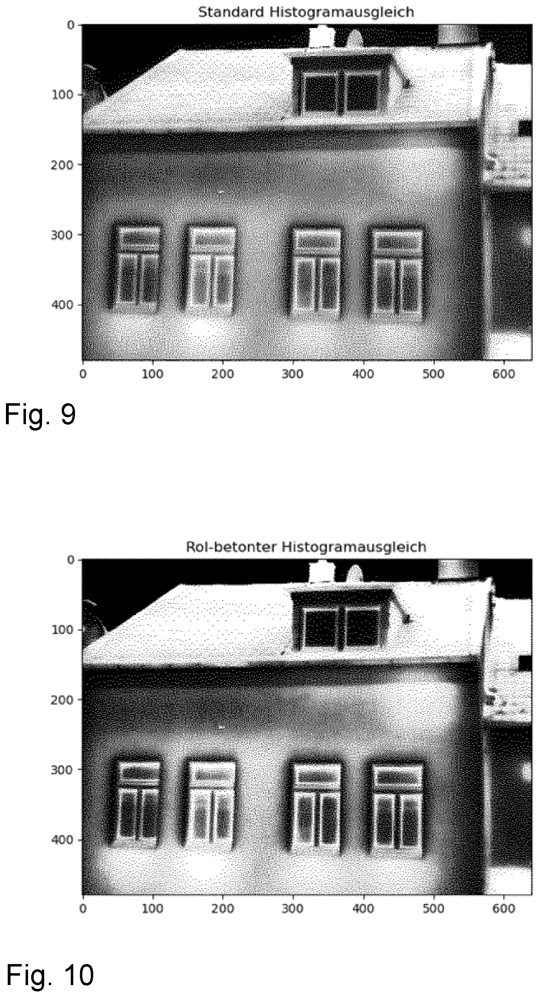

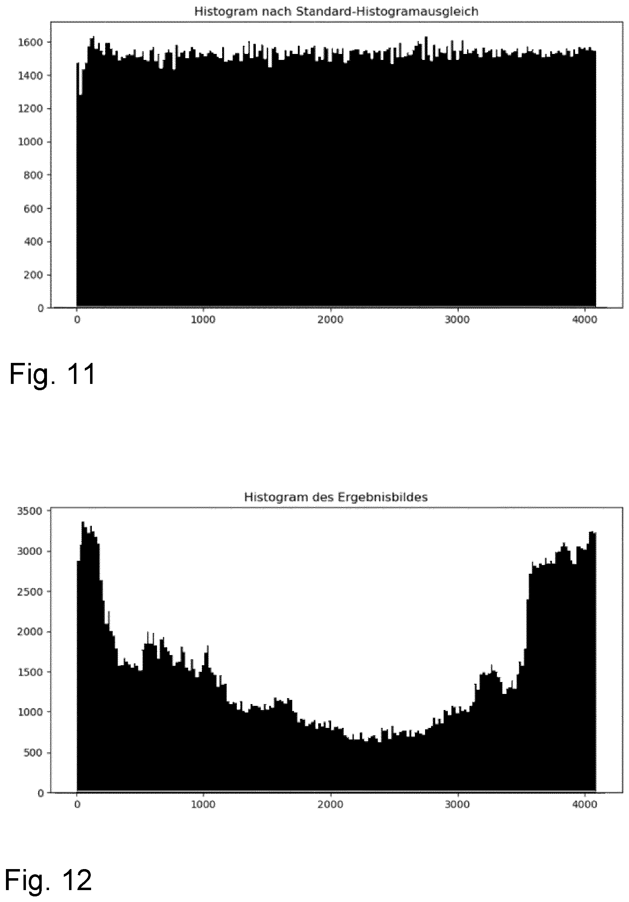

Im Stand der Technik ist zur Verbesserung der Darstellung auch ein sogenannter automatischer Histogrammausgleich bekannt. Dabei werden im Wesentlichen die Temperaturwerte im Wärmebild gezählt und die Farben entsprechend der Häufigkeit der einzelnen Temperaturwerte zugewiesen. Die Fig. 9 zeigt das Wärmebild der Fig. 1 nach einem solchen automatischen Histogrammausgleich. Das zugehörige Histogramm ist in der Fig. 11 gezeigt. Typischerweise bildet das Histogramm nach einem automatischen Histogrammausgleich mehr oder weniger eine Gerade. Auf diese Weise ist bereits eine Verbesserung der Darstellung möglich. Im Beispiel umfasst jedoch das Dach und der Himmel etwa 1/3 der Pixel, so dass durch den automatischen Histogrammausgleich auch diese Bereiche verstärkt werden.

Gemäß einer weiteren Ausführung der Erfindung wird stattdessen ein an den interessierenden Bereich angepasster Histogrammausgleich vorgenommen. Hierzu werden zunächst ausgehend vom Histogramm des Ausgangsbildes die Temperaturwerte innerhalb des interessierenden Bereichs mit einem Faktor stärker gewichtet, also multipliziert.

Im Wesentlichen entsteht dabei eine Abbildungsfunktion, die einem Temperaturwert eine Farbe der Farbpalette zuordnet.

Die Fig. 8 zeigt das Histogramm der Fig. 3 mit einem Gewichtungsfaktor von 10. Hierbei ist deutlich zu erkennen, dass vor allem der Haupt-Peak 3, der im Wesentlichen innerhalb des interessierenden Bereichs 2 liegt, höher und schmaler wird. Der zweite Peak 4 ist gegenüber der Fig. 3 wesentlich gedämpft.

Ausgehend von diesem gewichteten Histogramm wird nun ein Histogrammausgleich durchgeführt. Die Fig. 10 zeigt das zugehörige Wärmebild und die Fig. 12 das Histogramm. Dieses Histogramm zeigt ähnlich wie das Histogramm der abschnittsweise linearen Abbildungsfunktion in Fig. 7 deutliche Peaks an den beiden Rändern. Dies deutet darauf hin, dass innerhalb dieser Bereiche viele Pixel liegen, die aber nur wenige Farben benutzen. Der interessierende Bereich liegt in der Mitte und verwendet auch insgesamt hier mehr Farben.

Im direkten Vergleich der Wärmebilder der Fig. 10 und 12 ist deutlich der bessere Kontrast der Fig. 12 innerhalb des interessierenden Bereichs zu erkennen.

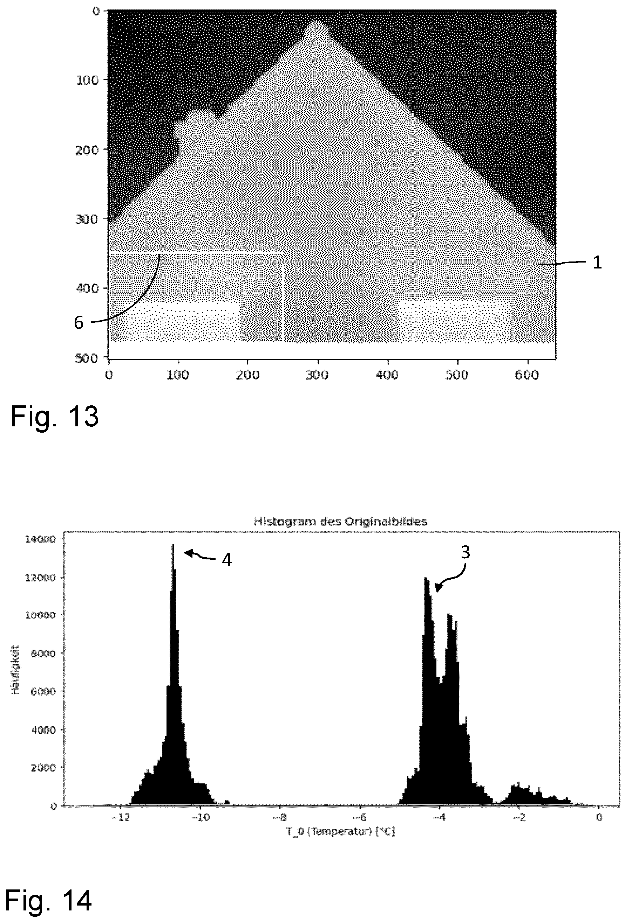

Die Fig. 13 zeigt ein Wärmebild einer zweiten Szene mit einem interessierenden Bereich 2, der hier in der linken unteren Bildecke liegt.

Die Fig. 14 zeigt das Histogramm des Wärmebildes der Fig. 13. Dieses zeigt einen Haupt-Peak 3 um -4°C, der die Wand widerspiegelt und innerhalb des interessierenden Bereichs liegt, und einen zweiten Peak 4 bei etwa -10,5°C, der den Himmel widerspiegelt.

Die Beispielszene weist die nachfolgenden Temperaturwerte in der oben definierten Notation auf.
Gmin=-12,8°C; Gmax=-0,1°C
Rmin=-4,9°C; Rmax=-0,1°C

In diesem Beispiel gilt also Rmax=Gmax.

Gemäß der oben aufgeführten Vorschrift ergibt sich bei der Bestimmung der abschnittsweise linearen Abbildungsfunktion 7, in diesem Beispiel, dass nur zwei Abschnitte vorhanden sind, ein erster Abschnitt 8, entsprechend dem interessierenden Bereich 2, und ein unterer Abschnitt 9. Es gibt keinen oberen Abschnitt für den gilt T_1>Rmax2.

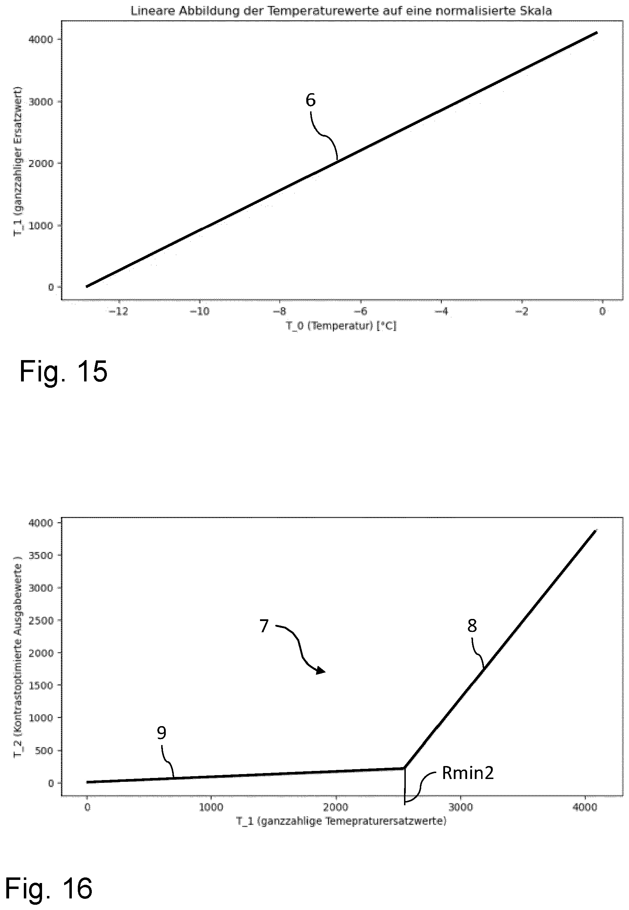

Die Fig. 15 zeigt analog zur Fig. 4 die lineare Abbildungsfunktion 6 des Wärmebildes der Fig. 13. Die Fig. 16 zeigt die abschnittsweise lineare Abbildungsfunktion 7. Auch hier ist die abschnittsweise lineare Abbildungsfunktion 7 vereinfacht als Transferfunktion zwischen ganzzahligen Farbwerten dargestellt, könnte jedoch genauso gut als Abbildungsfunktion einem Temperaturwert einen Farbwert zuordnen.

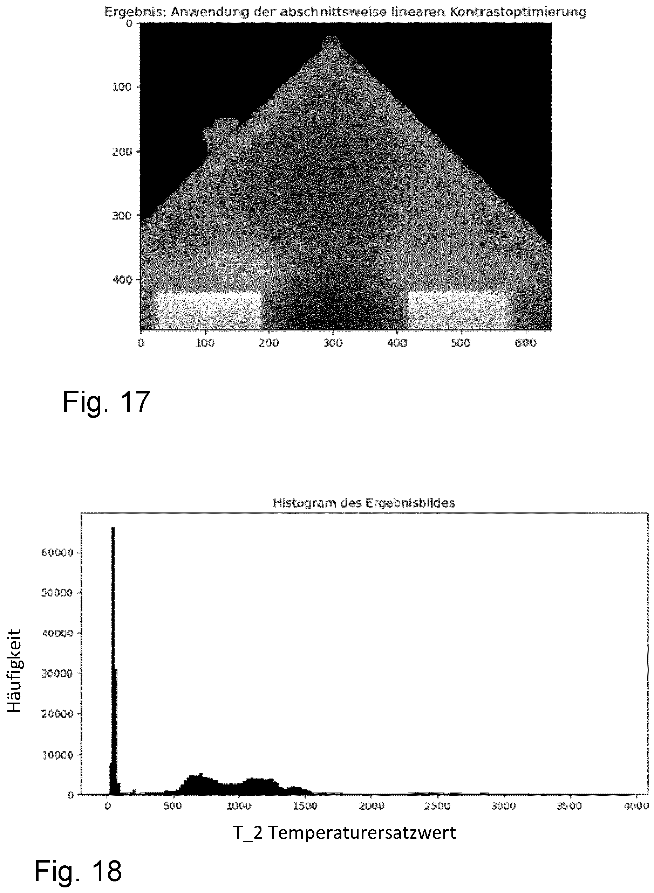

Die Fig. 17. zeigt das gemäß der abschnittsweise linearen Abbildungsfunktion 7 der Fig. 16 eingefärbte Wärmebild 1 der Fig. 13. Im Vergleich zur Fig. 13 ist deutlich der verbesserte Kontrast der Hauswand zu erkennen. Das Histogramm 13 des Wärmebildes der Fig. 17 ist in der Fig. 18 gezeigt. Dieses zeigt einen Peak, der den unteren Bereich 9 widerspiegelt. Also wenige Farben für viele Pixel verwendet. Während der interessierende Bereich 2 den größten Anteil der Farben benutzt.

Analog zur ersten Szene, kann auch hier alternativ ein angepasster Histogrammausgleich angewendet werden.

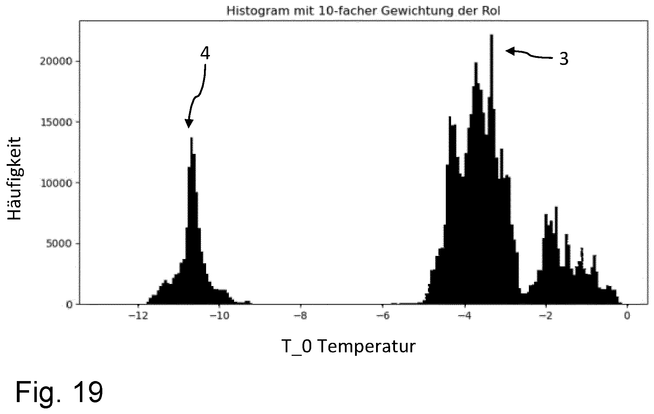

Die Fig. 19 zeigt das mit einem Gewichtungsfaktor 10 gewichtete Histogramm des in der Fig. 17 gezeigten Histogramms des Wärmebildes der Fig. 13. Hier ist deutlich zu erkennen, dass der erste Peak 3 im Vergleich zum zweiten Peak schmaler und niedriger ausfällt.

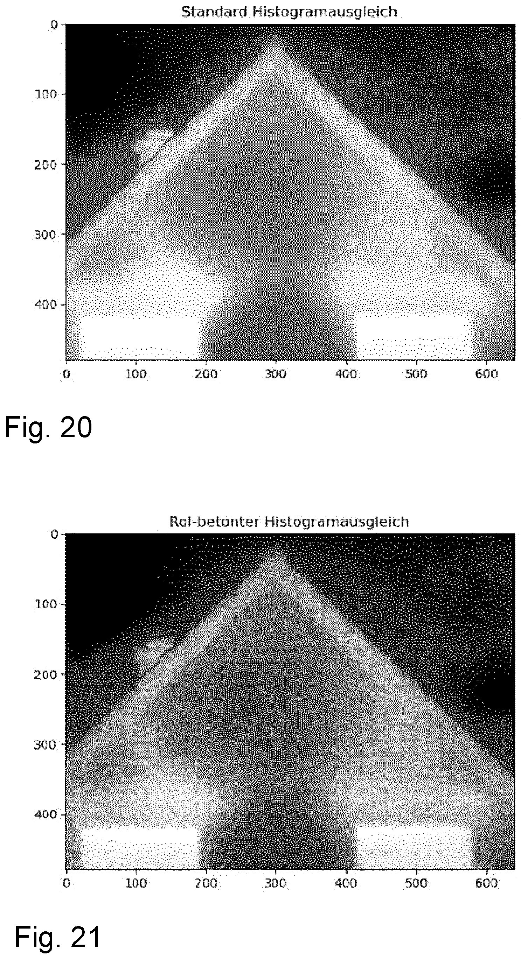

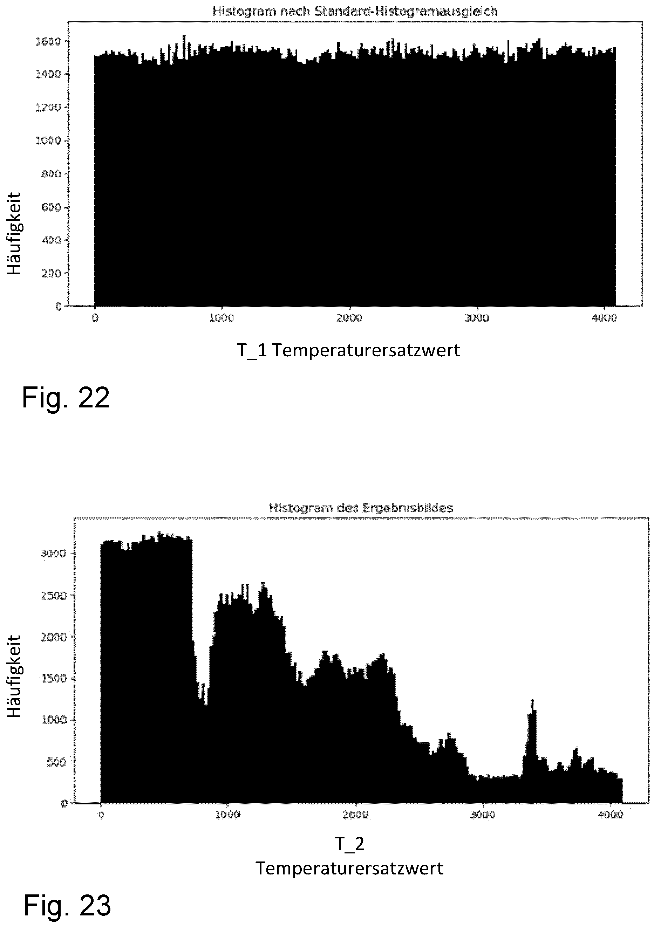

Die Fig. 20 zeigt das Wärmebild der Fig. 13 mit einem Standard-Histogrammausgleich. Das zugehörige Histogramm ist in der Fig. 22 gezeigt. Erwartungsgemäß bildet auch dieses Histogramm eine Gerade oder ein Plateau.

Die Fig. 21 zeigt das Wärmebild der Fig. 13 mit einem angepassten Histogrammausgleich gemäß dem gewichteten Histogramm der Fig. 19. Wie in dem zugehörigen Histogramm in der Fig. 23 zu sehen ist, wird hier der interessierende Bereich auf einen breiteren Farbbereich verteilt. Das Wärmebild erhält somit in dem interessierenden Bereich einen größeren Kontrast.

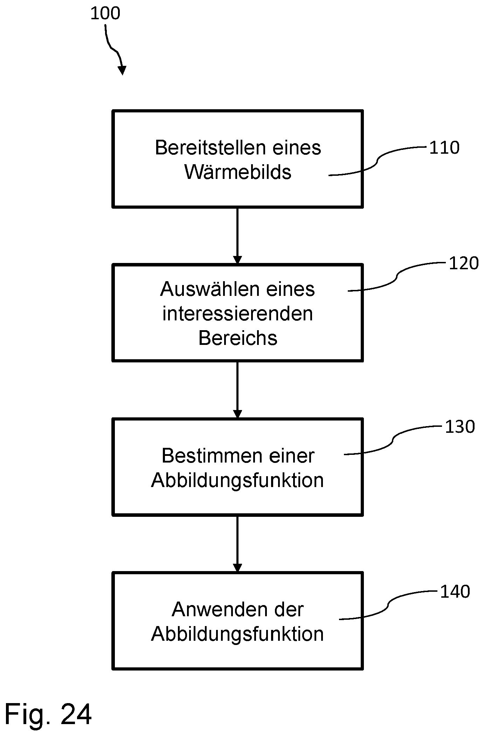

Die Fig. 24 zeigt ein Ablaufdiagramm eines erfindungsgemäßen Verfahrens 100 zur Darstellung eines Wärmebilds.

In einem ersten Schritt 110 wird zunächst ein Wärmebild bereitgestellt, etwa durch eine Wärmebildkamera. Dieses Wärmebild kann etwa Rohdaten eines Wärmebildsensors umfassen.

In einem weiteren Schritt 120 wird in dem Wärmebild wenigstens ein interessierender Bereich markiert. Die Markierung kann beispielsweise in einer ersten Darstellung des Wärmebilds erfolgen. Es kann jedoch auch eine zusätzliche VIS-Kamera zur Aufnahme eines Bildes im sichtbaren Spektrum vorhanden sein, in dem der interessierende Bereich ausgewählt und markiert werden kann. Hierzu entspricht vorzugsweise der Bildbereich der VIS-Kamera dem Bildbereich der Wärmebildkamera.

Der interessierende Bereich kann auch automatisch in der Bildmitte festgelegt sein und eine vorgegebene Größe aufweisen. Hierbei sind viele weitere Möglichkeiten denkbar, die jedoch keinen Einfluss auf die Erfindung haben.

In einem weiteren Schritt 130 wird eine Abbildungsfunktion bestimmt, nach der die Farben einem Temperaturbereich zugeordnet werden, wobei Kontraste im interessierenden Bereich verstärkt und Kontraste außerhalb des interessierenden Bereichs reduziert werden.

In einem letzten Schritt 140 wird die Abbildungsfunktion auf das Wärmebild angewendet. Das bedeutet, dass den Temperaturwerten die Farben gemäß der Abbildungsfunktion zugeordnet werden. Durch diese Zuordnung entsteht eine Darstellung des Wärmebilds, die etwa gespeichert oder auf einem Bildschirm angezeigt werden kann.

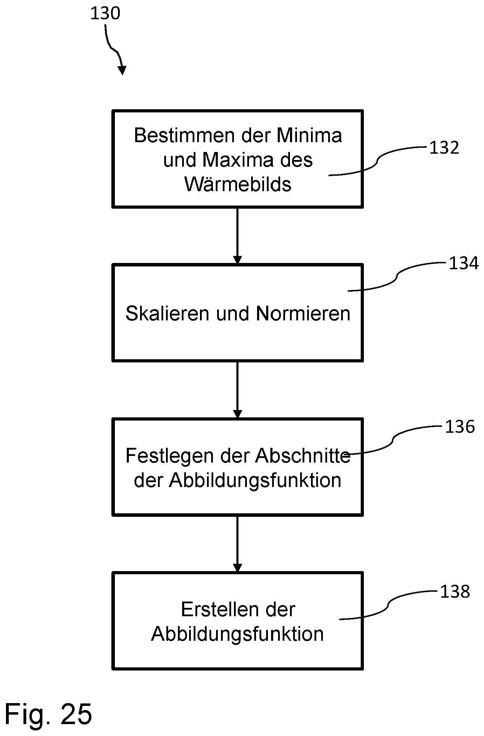

Die Fig. 25 zeigt ein Ablaufdiagramm eines ersten Verfahrens zur Bestimmung der Abbildungsfunktion 160 als abschnittsweise lineare Abbildungsfunktion.

In einem ersten Schritt 162 werden zunächst die globalen und regionalen Minima und Maxima der Temperaturwerte in dem Wärmebild bestimmt. Diese sind im Folgenden mit Gmin, Gmax, Rmin und Rmax bezeichnet.

In einem zweiten Schritt 164 wird die Anzahl der Farben auf den im Wärmebild vorkommenden Temperaturbereich skaliert und das regionale Minimum und Maximum normiert gemäß der nachfolgenden Vorschrift.
# normalize Rmin, Rmax
resolution = 4096$s = resolution / \left(Gmax-Gmin\right) # scale factor$$Rmin 2 = \left(Rmin-Gmin\right) * s$$Rmax 2 = \left(Rmax-Gmin\right) * s$

Rmin2 und Rmax2 sind die Farbwerte zwischen 0 und 4095, bei denen die Temperaturgrenzen Rmin und Rmax liegen.

In einem folgenden Schritt 166 wird eine abschnittsweise, lineare Abbildungsfunktion definiert. Dabei bilden jeweils die regionalen Extrema, also Rmin und Rmax einen

Abschnittswechsel. Die Abbildungsfunktion enthält demnach in der Regel 3 Abschnitte.

Einen ersten Abschnitt 8 für den Temperaturbereich Rmin2 < T_1 < Rmax2.

Einen oberen Abschnitt 10 für den Temperaturbereich T_1>Rmax2 und einen unteren Abschnitt 9 für den Temperaturbereich T_1<Rmin2.

In jedem Abschnitt wird eine lineare Abbildung so gewählt, dass in dem ersten Abschnitt 8 90% der zur Verfügung stehenden Farben verwendet werden. In den beiden anderen Abschnitten 9, 10 werden jeweils 5% der Farben verwendet.

Auf diese Weise werden für die Temperaturwerte, die in dem interessierenden Bereich 2 vorkommen die Mehrzahl der Farben verwendet, so dass dort die Darstellung wesentlich detaillierter und mit höherem Kontrast erfolgt.

Die abschnittsweise lineare Abbildungsfunktion 7, etwa der

Fig. 5, ist somit eine Neuzuordnung der Farbwerte und noch keine direkte Zuordnung der Farben zu Temperaturwerten.

In der Fig. 5 werden etwa in dem unteren Abschnitt 9 die Farben mit den Werten 0 bis Rmin2 (etwa 1414) neu den Farbwerten zwischen 0 und 204 zugewiesen. Während die Werte des interessierenden Bereichs zwischen Rmin2 und Rmax2 statt etwa 600 Farbwerten nun 3800 Farbwerten zugewiesen werden.$p 1 = \left(Rmin2, 0.05*resolution\right)$$p 2 = \left(Rmax2, 0.90*resolution\right)$

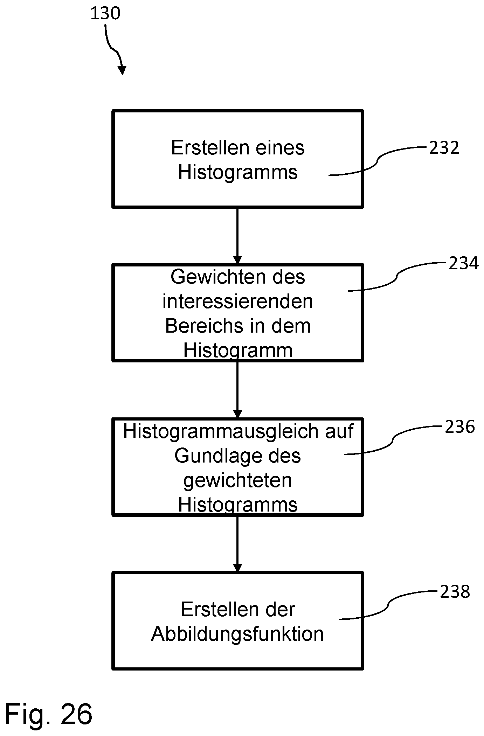

Die Fig. 26 zeigt ein Ablaufdiagramm eines weiteren Verfahrens 162 zur Bestimmung der Abbildungsfunktion gemäß einem angepassten Histogrammausgleich.

Dabei wird die Abbildungsfunktion gemäß einem Histogrammausgleich gewählt, wobei die Temperaturwerte innerhalb des ersten Abschnitts 8 stärker gewichtet werden als Temperaturwerte, die nur in weiteren Abschnitten 9, 10 vorkommen.

In einem ersten Schritt 262 wird ein Histogramm eines Wärmebildes erstellt. Ein solches Histogramm ist etwa in den Fig. 3 und 14 gezeigt.

In einem zweiten Schritt 264, wird der Bereich des Histogramms, der innerhalb des interessierenden Bereichs 2 liegt, mit einem Gewichtungsfaktor gewichtet. Hierzu werden alle Werte innerhalb des interessierenden Bereichs mit diesem Gewichtungsfaktor multipliziert. Im Beispiel ist dieser Gewichtungsfaktor mit 10 gewählt. Es können jedoch auch andere Faktoren gewählt werden. Hieraus resultiert ein an den interessierenden Bereich angepasstes Histogramm, wie in den Fig. 8 und 19 gezeigt.

In einem weiteren Schritt 266 wird ein Histogrammausgleich durchgeführt, ausgehend von dem angepassten Histogramm.

Schließlich wird in Schritt 268 eine Abbildungsfunktion anhand des angepassten Histogrammausgleichs erstellt.

### Bezugszeichenliste

- 1: Wärmebild
- 2: Interessierender Bereich
- 3: Haupt-Peak
- 4: zweiter Peak
- 5: Flacher Bereich
- 6: lineare Abbildungsfunktion
- 7: abschnittsweise lineare Abbildungsfunktion
- 8: Erster Abschnitt
- 9: Unterer Abschnitt
- 10: Oberer Abschnitt

## Patentansprüche

1. Verfahren zur Darstellung eines Wärmebilds, wobei jeweils einem Temperaturbereich des Wärmebildes eine Farbe einer Farbpalette zugeordnet wird, wobei in dem Wärmebild (1) wenigstens ein interessierender Bereich (2) markiert wird, und wobei eine Abbildungsfunktion (7), nach der die Farben einem Temperaturbereich zugeordnet werden, bestimmt wird, wobei die Abbildungsfunktion in verschiedene Abschnitte (8, 9, 10) unterteilt wird, wobei ein erster Abschnitt (8) durch die Temperaturgrenzen des wenigstens einen interessierenden Bereichs (2) gegeben ist, und weitere Abschnitte (9, 10) die Temperaturen außerhalb des wenigstens einen interessierenden Bereichs abbilden, wobei im ersten Abschnitt (8) die Abbildungsfunktion (7) so gewählt wird, dass Kontraste erhöht werden, und wobei in den weiteren Abschnitten die Abbildungsfunktion (7) so gewählt wird, dass Kontraste reduziert werden, wobei die Abbildungsfunktion (7) zur Erhöhung der Kontraste dem ersten Abschnitt (8) mehr Farben zuordnet als den weiteren Abschnitten (9, 10).

2. Verfahren nach Anspruch 1, **dadurch gekennzeichnet, dass** einem Temperaturbereich, der innerhalb eines interessierenden Bereichs in dem Wärmebild auftritt, mehr Farben der Farbpalette zugeordnet werden, als es bei gleichmäßiger Farbverteilung der Fall wäre.

3. Verfahren nach einem der vorangehenden Ansprüche, **dadurch gekennzeichnet, dass** einem Temperaturbereich ein desto größerer Bereich der Farbpalette zugeordnet wird, je häufiger und je geometrisch näher an einem interessierenden Bereich des Wärmebildes Temperaturwerte innerhalb des Temperaturbereichs auftreten und/oder dass einem Temperaturbereich eine Anzahl an Farben zugeordnet wird, in Abhängigkeit davon je häufiger und je geometrisch näher an einem interessierenden Bereich des Wärmebildes Temperaturwerte innerhalb des Temperaturbereichs auftreten.

4. Verfahren nach einem der vorangehenden Ansprüche, **dadurch gekennzeichnet, dass** Temperaturbereiche mit bestimmten Gradienten innerhalb eines interessierenden Bereichs einen größeren Bereich der Farbpalette zugeordnet bekommen.

5. Verfahren nach einem der Ansprüche 1 bis 4, **dadurch gekennzeichnet, dass** die Abbildungsfunktion gemäß einem Histogrammausgleich gewählt wird, wobei die Temperaturwerte innerhalb des ersten Abschnitts (8) stärker gewichtet werden als Temperaturwerte, die nur in weiteren Abschnitten (9, 10) vorkommen.

6. Verfahren nach Anspruch 5, **dadurch gekennzeichnet, dass** bei der Erstellung des Histogramms ein Temperaturwert, der innerhalb des interessierenden Bereichs vorkommt mit einem Gewichtungsfaktor multipliziert wird, so dass der Temperaturwert überproportional in dem Histogramm berücksichtigt ist.

7. Verfahren nach einem der vorangehenden Ansprüche, **dadurch gekennzeichnet, dass** der interessierende Bereich (2) durch Wählen eines Bildpunktes oder Bildausschnitts markiert wird und/oder dass der interessierende Bereich mehrere Bildpunkte des Wärmebildes umfasst.

8. Verfahren nach einem der vorangehenden Ansprüche, **dadurch gekennzeichnet, dass** der interessierende Bereich (2) automatisiert in der Bildmitte des Wärmebildes oder an einem Punkt mit der höchsten oder niedrigsten Temperatur markiert wird.

9. Verfahren nach einem der vorangehenden Ansprüche, **dadurch gekennzeichnet, dass** eine Größe des interessierenden Bereichs (2) festgelegt, einstellbar und/oder änderbar ist, und/oder dass der interessierende Bereich (2) durch einen Kreis, ein Rechteck, ein Quadrat oder eine andere Geometrie definiert ist.

10. Verfahren nach einem der vorangehenden Ansprüche, **dadurch gekennzeichnet, dass** ein Bild im sichtbaren Spektralbereich bereitgestellt wird, dessen Bildausschnitt im Wesentlichen mit dem Bildausschnitt des Wärmebilds übereinstimmt, der interessierende Bereich (2) in diesem sichtbaren Bild markiert und der interessierende Bereich (2) auf das Wärmebild übertragen wird.

11. Verfahren nach einem der vorangehenden Ansprüche, **dadurch gekennzeichnet, dass** mehrere interessierende Bereiche markiert werden, die im Rahmen des Verfahrens als ein zusammenhängender interessierender Bereich betrachtet werden.

## Claims

1. A method for displaying a thermal image, wherein one color of a color palette is assigned in each case to a temperature range of the thermal image, wherein at least one region of interest (2) is marked in the thermal image (1), and
wherein an imaging function (7), according to which the colors are assigned to a temperature range, is defined, wherein the imaging function is divided into different sections (8, 9, 10), wherein a first section (8) is given by the temperature limits of the at least one region of interest (2), and further sections (9, 10) image the temperatures outside the at least one region of interest, wherein the imaging function (7) is selected in the first section (8) so that contrasts are increased, and wherein the imaging function (7) is selected in the further sections so that contrasts are reduced, wherein the imaging function (7) assigns more colors to the first section (8) than the further sections (9, 10) to increase the contrasts.

2. The method as claimed in claim 1, **characterized in that** more colors of the color palette are assigned to a temperature range which occurs within a region of interest in the thermal image than would be the case with uniform color distribution.

3. The method as claimed in any one of the preceding claims, **characterized in that** a larger range of the color palette is assigned to a temperature range, the more frequently and geometrically closer to a region of interest of the thermal image, temperature values occur within the temperature range and/or a number of colors is assigned to the temperature range depending on how much more frequently and how much geometrically closer to a region of interest of the thermal image, temperature values occur within the temperature range.

4. The method as claimed in any one of the preceding claims, **characterized in that** temperature ranges having specific gradients within a region of interest are assigned a larger range of the color palette.

5. The method as claimed in any one of claims 1 to 4, **characterized in that** the imaging function is selected according to a histogram equalization, wherein the temperature values within the first section (8) are weighted more strongly than the temperature values which only occur in the further sections (9, 10).

6. The method as claimed in claim 5, **characterized in that**, in creating the histogram, a temperature value which occurs within the region of interest is multiplied by a weighting factor, so that the temperature value is taken into consideration disproportionately in the histogram.

7. The method as claimed in any one of the preceding claims, **characterized in that** the region of interest (2) is marked by selecting a pixel or image detail and/or the region of interest comprises multiple pixels of the thermal image.

8. The method as claimed in any one of the preceding claims, **characterized in that** the region of interest (2) is marked in an automated manner in the image center of the thermal image or at a point having the highest or lowest temperature.

9. The method as claimed in any one of the preceding claims, **characterized in that** a size of the region of interest (2) is defined, settable, and/or changeable, and/or the region of interest (2) is defined by a circle, a rectangle, a square, or another geometry.

10. The method as claimed in any one of the preceding claims, **characterized in that** an image in a visible spectral range is provided, the image detail of which substantially corresponds to the image detail of the thermal image, the region of interest (2) is marked in this visible image, and the region of interest (2) is transferred to the thermal image.

11. The method as claimed in any one of the preceding claims, **characterized in that** multiple regions of interest are marked, which are viewed as a contiguous region of interest in the scope of the method.

## Revendications

1. Procédé d'affichage d'une image thermique, dans lequel une couleur dans une palette de couleurs est affectée à chaque zone de température de l'image thermique, dans lequel au moins une région d'intérêt (2) est marquée dans l'image thermique (1) et dans lequel est déterminée une fonction de visualisation (7) selon laquelle les couleurs sont associées à une zone de température, la fonction de visualisation étant divisée en différentes sections (8, 9, 10), une première section (8) étant définie par les limites de température de l'au moins une région d'intérêt (2) et d'autres sections (9, 10) représentant les températures en dehors de l'au moins une région d'intérêt, la fonction de visualisation (7) étant choisie dans la première section (8) de façon à accentuer les contrastes et la fonction de visualisation (7) étant choisie dans les autres sections de façon à atténuer les contrastes, la fonction de visualisation (7) attribuant, pour l'accentuation des contrastes, davantage de couleurs à la première section (8) qu'aux autres sections (9, 10)

2. Procédé selon la revendication 1, **caractérisé en ce qu'**un plus grand nombre de couleurs de la palette de couleurs est attribué à une zone de température apparaissant à l'intérieur d'une région d'intérêt dans l'image thermique que si la répartition des couleurs était uniforme.

3. Procédé selon l'une des revendications précédentes, **caractérisé en ce que** la plage de la palette de couleurs associée à une zone de température est d'autant plus grande que des valeurs de température incluses à l'intérieur de la zone de température se présentent plus fréquemment et plus près géométriquement d'une région d'intérêt de l'image thermique et/ou **en ce qu'**un nombre de couleurs est associé à une zone de température selon que des valeurs de température incluses à l'intérieur de la zone de température se présentent plus fréquemment et plus près géométriquement d'une région d'intérêt de l'image thermique.

4. Procédé selon l'une des revendications précédentes, **caractérisé en ce qu'**une plus large plage de la palette de couleurs est attribuée à des zones de température dotées de certains gradients à l'intérieur d'une région d'intérêt.

5. Procédé selon l'une des revendications 1 à 4, **caractérisé en ce que** la fonction de visualisation est choisie selon une égalisation d'histogramme dans laquelle les valeurs de température dans la première section (8) sont plus fortement pondérées que les valeurs de température qui ne se présentent que dans d'autres sections (9, 10).

6. Procédé selon la revendication 5, **caractérisé en ce que**, lors de la création de l'histogramme, une valeur de température qui se présente à l'intérieur de la région d'intérêt est multipliée par un facteur de pondération tel que la valeur de température est prise en compte de façon disproportionnée dans l'histogramme.

7. Procédé selon l'une des revendications précédentes, **caractérisé en ce que** la région d'intérêt (2) est marquée par la sélection d'un point de l'image ou d'un fragment de l'image et/ou **en ce qu'**elle comprend plusieurs points d'image de l'image thermique.

8. Procédé selon l'une des revendications précédentes, **caractérisé en ce que** la région d'intérêt (2) est marquée de façon automatique au milieu de l'image thermique ou au point ayant la température la plus élevée ou la plus basse.

9. Procédé selon l'une des revendications précédentes, **caractérisé en ce qu'**une taille de la région d'intérêt (2) est fixée et est ajustable et/ou modifiable et/ou **en ce que** la région d'intérêt (2) est définie par un cercle, un rectangle, un carré ou une autre géométrie.

10. Procédé selon l'une des revendications précédentes, **caractérisé en ce qu'**une image dans la plage visible du spectre dont le fragment d'image coïncide sensiblement avec le fragment d'image de l'image thermique est fournie, la région d'intérêt (2) est marquée dans cette image en lumière visible et la région d'intérêt (2) est transférée à l'image thermique.

11. Procédé selon l'une des revendications précédentes, **caractérisé en ce que** sont marquées plusieurs régions d'intérêt, qui sont examinées comme une région d'intérêt d'un seul tenant dans le cadre du procédé.
